# EUROPEAN PATENT APPLICATION

(11) **EP 1 795 727 A2**
(43) Date of publication of application: **13.06.2007**
(21) Application number: 06125727.5
(22) Date of filing: 08.12.2006
(51) Int. Cl.: F02D 41/14

(54) **Control system designed to minimize deterioration of exhaust gas sensor for use in diesel engine**

(30) Priority: 09.12.2005 JP 2005356123
(71) Applicant: DENSO CORPORATION, Kariya-city, Aichi-pref., 448-8661 (JP)
(72) Inventor: KOSAKA, Yuji, Intellectual Property Department, Kariya-city Aichi 448-8661 (JP)
(74) Representative: TBK-Patent

(57) **Abstract**

A gas sensor control apparatus for an exhaust gas sensor working to measure a selected component of exhaust gas from a diesel engine. The apparatus consists of a heater to heat the exhaust gas sensor to activate it and a controller working to restrict an operation of the heater in the condition that drops of water are expected to exist in an exhaust system of the engine. The controller determines whether the condition in which the temperature of the exhaust gas sensor is expected to be lower than that of the exhaust gas is met or not based on an operating condition of the diesel engine. When the temperature condition is met, the controller elevates the temperature of the exhaust gas to promote heating of the exhaust gas sensor through the heater, thereby minimizing the deterioration in characteristics or performance of the exhaust gas sensor.

## Description

### CROSS REFERENCE TO RELATED DOCUMENT

The present application claims the benefit of Japanese Patent Application No. 2005-356123 filed on December 9, 2005, the disclosure of which is incorporated herein by reference.

### BACKGROUND OF THE INVENTION

### 1 Technical Field of the Invention

The present invention relates generally to a diesel engine exhaust gas sensor control system designed to control operations of an exhaust gas sensor and a heater working to heat the exhaust gas sensor to activate it, and more particularly to such a control system designed to minimize the deterioration in operation of the exhaust gas sensor.

### 2 Background Art

It is known to use an air-fuel ratio sensor to measure the air-fuel ratio of exhaust gas flowing in an exhaust system of a gasoline engine in order to control an output of the engine. In use, the air-fuel ratio sensor is typically warmed up by a heater to ensure the stability in operation thereof. However, when the air-fuel ratio sensor is warmed by the heater in the presence of drops of water in the exhaust system, it may result in adhesion of the drops of water to the body of the air-fuel ratio sensor, thereby causing physical damage to thereto.

In order to avoid the above problem, Japanese Patent First Publication No. 2001-41923 discloses controlling the energization of the heater when it is determined that the drops of water are adhered to an inner wall of the exhaust pipe.

In recent years, with the tightening of control on exhaust emissions from diesel engines, there has been an increasing need for use of the air-fuel ratio sensor. In the case of use in the diesel engines, the air-fuel ratio sensor also needs to be warmed up using the heater under the condition that no drops of water are sticking to the exhaust pipe. For instance, there is proposed not to activate the heater to warm up the air-fuel ratio sensor until the temperature of the exhaust pipe is elevated up to 50°C. The diesel engines are usually higher in thermal efficiency than gasoline engines, so that the temperature of exhaust gas from the diesel engines is lower than that of exhaust gas from the gasoline engines. For instance, in winter conditions in which the outside temperature is low, the temperature of the exhaust pipe may not reach 50°C depending upon running conditions of a vehicle in which the diesel engine is mounted or driving propensity of a vehicle operator, so that the heater is kept off, and the air-fuel ratio sensor is not activated at all.

When the air-fuel ratio sensor is not warmed up, it may cause the air-fuel ratio sensor to be exposed to the heat of the exhaust gas higher in temperature than the air-fuel ratio sensor for a long period of time, which accelerates the deterioration in output characteristics of the air-fuel ratio sensor.

Other types of sensors designed to measure components of exhaust gas from the diesel engines usually face the same problem, as described above.

### SUMMARY OF THE INVENTION

It is therefore a principal object of the invention to provide a diesel engine exhaust gas sensor control system designed to control or minimize the deterioration in characteristics or performance of an exhaust gas sensor for use in diesel engines.

According to one aspect of the invention, there is provided an diesel engine exhaust gas sensor control apparatus which may be employed for automotive common rail diesel engines and is designed to control an operation of an exhaust gas sensor working to measure a given component of exhaust gas from a diesel engine. The control apparatus comprises: (a) a heater working to heat the exhaust gas sensor to activate the exhaust gas sensor and (b) a controller working to restrict an operation of the heater in a condition that a drop of water is expected to exist in an exhaust system of the engine. The controller determines whether a given temperature condition in which a temperature of the exhaust gas sensor is expected to be lower than that of the exhaust gas is met or not based on a given parameter that is a function of an operating condition of the diesel engine. When the temperature condition is determined to be met, the controller works to elevate the temperature of the exhaust gas to promote heating of the exhaust gas sensor by means of the heater, thus causing the exhaust gas sensor to be increased in temperature above the exhaust gas to minimize the deterioration in performance of the exhaust gas sensor.

In the preferred mode of the invention, when the temperature condition is determined to be met, the controller works to permit post injection of fuel injected to the diesel engine to be performed to purge an exhaust aftertreatment mechanism installed upstream of the exhaust gas sensor in the exhaust system to elevate the temperature of the exhaust gas to promote the heating of the exhaust gas sensor by means of the heater.

The controller monitors the temperature of the exhaust gas as the given parameter. The controller determines whether the temperature condition is met or not based on the history of a change in the temperature of the exhaust gas which bears a correlation to the temperature of the exhaust system.

The controller averages the temperature of the exhaust gas to quantify the change in the temperature of the exhaust gas as the history thereof.

When the number of consecutive conditions each in which the temperature of the exhaust gas is kept lower than a given value during a run of the diesel engine reaches a given value, the controller may alternatively determine that the temperature condition is met.

The given parameter may alternatively be a function of the temperature of outside air. The controller may work to determine whether the temperature condition is met or not based on the function of the temperature of the outside air.

### BRIEF DESCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1 is a block diagram which shows an engine control system working as an exhaust gas sensor control system according to the first embodiment of the invention;
Fig. 2 is a flowchart of a post injection control program to control post injection of fuel into a diesel engine which is executed by the engine control system of Fig. 1;
Fig. 3 is a flowchart of a heater control program to be executed by the engine control system of Fig. 1 to control an operation of a heater to activate an air-fuel ratio sensor;
Fig. 4 is a flowchart of an exhaust gas temperature history sampling program to be executed by the engine control system of Fig. 1 to sample the history of a change in temperature of exhaust gas emitted from a diesel engine;
Fig. 5 is a graph which demonstrates the occurrence rate or the number of times the temperature of exhaust gas has fallen in each of temperature ranges;
Fig. 6 is a graph which demonstrates changes in temperature of exhaust gas in each of temperature history sampling cycles;
Fig. 7 is a table listing percentages of the number of times the temperature of exhaust gas having fallen in temperature ranges, respectively;
Fig. 8 is a flowchart of a post injection control program to be executed by the engine control system of Fig. 1 to alter a requirement for execution of post injection of fuel into a diesel engine;
Fig. 9 is a map table which shows a threshold, as used to control post injection of fuel into a diesel engine, which is determined as a function of an average temperature of exhaust gas in the flowchart of Fig. 8;
Fig. 10 is a graph which demonstrates changes in temperature of an exhaust pipe;
Fig. 11 is a flowchart of a post injection control program to be executed by an engine control system of the second embodiment to alter a requirement for execution of post injection of fuel into a diesel engine;
Fig. 12 is a flowchart of a counting program to be performed by an engine control system of the third embodiment to count the number of consecutive trips each for which the temperature of exhaust gas is kept below a given value;
Fig. 13 is a flowchart of a program to be executed to control post injection of fuel into a diesel engine in connection with the program of Fig. 12; and
Fig. 14 is a flowchart of a program to be executed by an engine control system of the fourth embodiment to monitor the fact that the temperature of an air-fuel ratio sensor continues to be lower than that of exhaust gas by using a ratio of a heater on-time to a total time that is the length of time a diesel engine is running.

### DESCRIPTION OF THE PREFERRED EMBODIMENTS

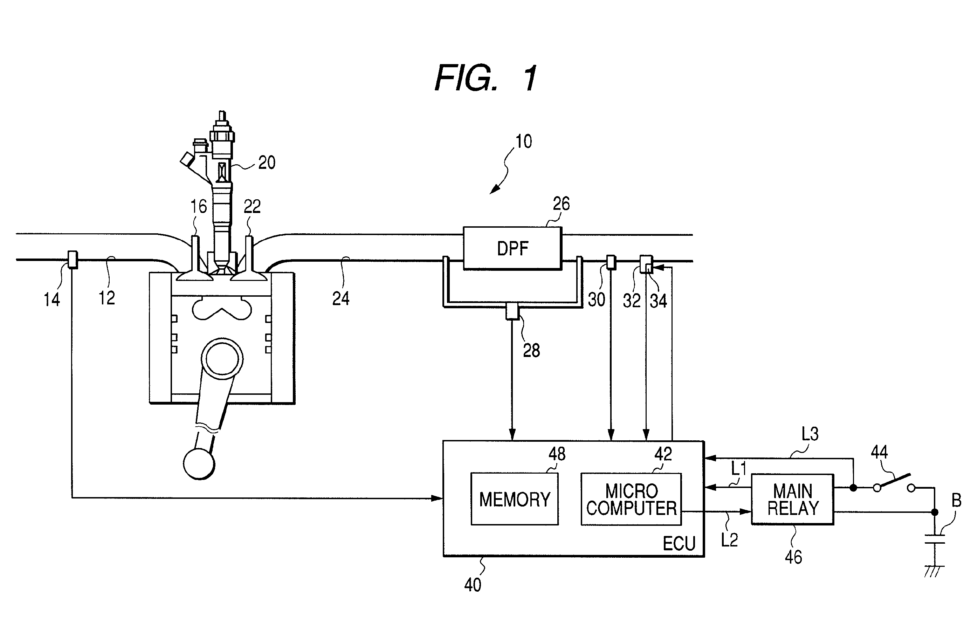

Referring to the drawings, wherein like reference numbers refer to like parts in several views, particularly to Fig. 1, there is shown an automotive engine control system according to the first embodiment of the invention which is designed as, for example, a common rail fuel injection system (also called an accumulator injection system) working to control injection of fuel into an internal combustion diesel engine 10.

The diesel engine 10 connects with an intake pipe 12 and an exhaust pipe 24. The intake pipe 12 has installed therein an intake air temperature sensor 14 working to measure the temperature of intake air sucked into the intake pipe 12. The intake air is charged by opening the an intake valve 16 into a combustion chamber 18 of the engine 10. The intake air is mixed with fuel sprayed by a fuel injector 20 and then burned in the combustion chamber 18. The burned mixture is emitted as exhaust gas to the exhaust pipe 24 when an exhaust valve 22 is opened.

The exhaust pipe 24 has installed therein a diesel particulate filter (DPF) 26 working to trap particulate matter contained in the exhaust gas. The exhaust pipe 24 also has a pressure difference sensor 28, an exhaust gas temperature sensor 30, and an air-fuel ratio sensor 32. The pressure difference sensor 28 works to measure a difference in pressure between an inlet and an outlet side of the DPF 26. The exhaust gas temperature sensor 30 works to measure the temperature of the exhaust gas flowing downstream of the DPF 26. The air-fuel ratio sensor 32 is installed downstream of the exhaust gas temperature sensor 30 and works to measure the concentration of oxygen (O₂) contained in the exhaust gas as a function of the air-fuel ratio of the mixture charged into the engine 10. The air-fuel ratio sensor 32 is equipped with a sensor element formed by a solid electrolyte body made of zirconia, a filter made of a porous material working to control exposure of the sensor element to the gas, and a heater 34 working to heat or warm the sensor element up to a given activation temperature.

The engine control system also includes an electronic control unit (ECU) 40, a main relay 46, an ignition switch 44. The ECU 40 serves, as apparent from discussion below, as a gas sensor controller, and consists essentially of a microcomputer 42 and an always data-retaining memory 48. The microcomputer 42 samples outputs from the pressure difference sensor 28, the exhaust gas temperature sensor 30, and the air-fuel ratio sensor 32 to control an operation or an output or torque of the diesel engine 10. The ECU 40 is supplied with electric power from a storage battery *B* through the ignition switch 44, the main relay 46, and a power supply line *L1.*

The main relay 46 works to establish an electric connection between the battery *B* and the power supply line *L1* when the ignition switch 44 is turned on or a drive signal is inputted thereto from the microcomputer 42 through a signal line L2. Specifically, when the ignition switch 44 is turned on, the main relay 46 supplies the power from the battery *B* to the ECU 40 to turn it on.

When turned on, the ECU 40 monitors an on-off state of the ignition switch 44 through a signal line L3 and. When the ignition switch 44 is turned off, the ECU 40 outputs the drive signal through the signal line *L2* to supply the power from the battery *B* to the ECU 40 through the main relay 46 and the power supply line *L1,* thereby maintaining the main relay 46 on to permit the ECU 40 to continue to execute a given task (e.g., exhaust-gas aftertreatment) which is to be completed before the ECU 40 is turned off.

The ECU 42 has installed therein the always data-retaining memory 48 which may be implemented by a nonvolatile memory, such as an EPROM, designed not to lose data while the power supply from the battery *B* is turned off or a back-up memory designed to be always supplied with the power from the battery *B* regardless of the on-off state of the ignition switch 44.

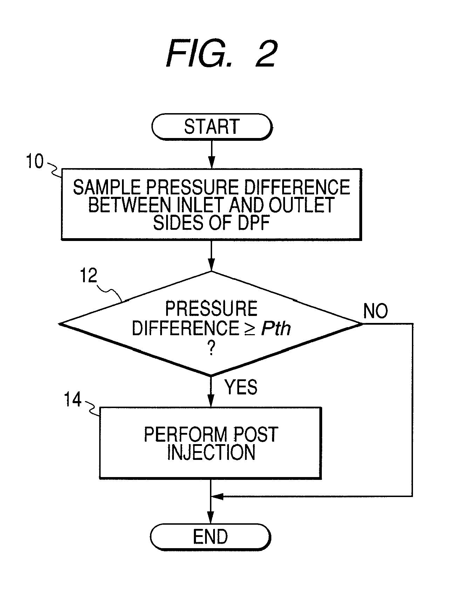

After the diesel engine 10 is started, the particulate matter contained in the exhaust gas is, as described above, trapped or collected by the DPF 26. The ECU 40 works to purge the DPF 26 to keep the DPF 26 free from clogging. Specifically, the ECU 40 performs a post injection to inject a small amount of fuel into the diesel engine 10 at a time much retarded from the top dead center in a compression stroke of a piston of the engine 10 to purge the DPF 26 of the particulate matter. A sequence of logical steps or program to be executed by the ECU 40 to achieve the post injection is shown in Fig. 2. The ECU 40 performs the program at given time intervals.

After entering the program, the routine proceeds to step 10 wherein an output of the pressure difference sensor 28 representing a difference in pressure between the inlet and outlet sides the DPF 26 is sampled.

The routine proceeds to step 12 wherein it is determined whether the pressure difference, as sampled in step 10, is greater than or equal to a preselected threshold *Pth* or not. This determination is made to determine whether the amount of particulate matter trapped in the DPF 26 has reached an upper limit or not which requires purging of the DFP 26. If a NO answer is obtained, then the routine terminates. Alternatively, if a YES answer is obtained, then the routine proceeds to step 14 wherein the fuel injector 20 is controlled to execute the post injection of fuel into the engine 10.

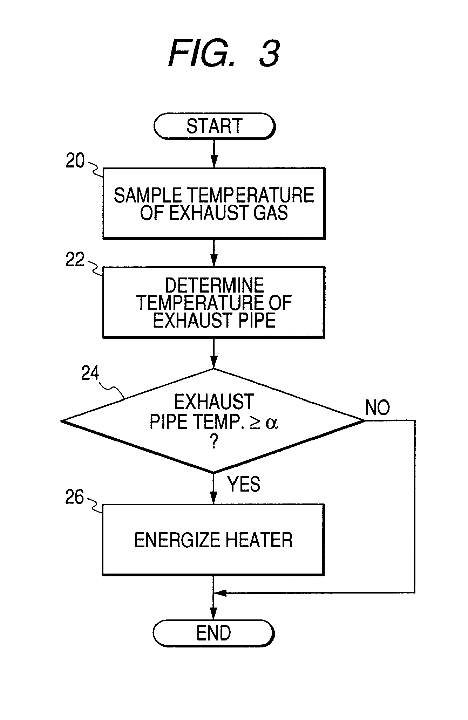

Typically, the sampling of an output from the air-fuel ratio sensor 32 to determine the air-fuel ratio of a mixture charged into the engine 10 correctly requires the need for activating the air-fuel ratio sensor 32 completely. The temperature required to activate the air-fuel ratio sensor 32 is usually several hundreds degrees (°C). This is achieved by the ECU 40 to heat the air-fuel ratio sensor 32 through the built-in heater 34. The heating of the air-fuel ratio sensor 32 in the presence of drops of water in the exhaust pipe 24 may, however, result in physical breakage of the air-fuel ratio sensor 32. In order to avoid this problem, the ECU 40 works to perform a heater control program, as illustrated in Fig. 3, in a cycle to control the heating of the air-fuel ratio sensor 32.

After entering the program of Fig. 3, the routine proceeds to step 20 wherein an output of the exhaust gas temperature senor 30 which represents the temperature of the exhaust gas flowing through the exhaust pipe 24. The routine proceeds to step 22 wherein the temperature of the exhaust pipe 24 is determined as a function of the temperature of the exhaust gas, as sampled in step 20. Specifically, the temperature of the exhaust pipe 24 is calculated based on the amount of heat transferred from the exhaust gas to the exhaust pipe 24 and the specific heat of the exhaust pipe 24. For instance, the amount of heat transferred to the exhaust pipe 24 is derived based on the temperature of the exhaust gas and a period of time for which such a temperature continues, that is, based on the temperature of the exhaust gas and the flow rate of the exhaust gas.

The routine proceeds to step 24 wherein it is determined whether the temperature of the exhaust pipe 24 is greater than a preselected threshold α or not. The threshold α is a lower limit of a temperature range within which drops of water are expected not to be in the exhaust pipe 24. If a NO answer is obtained meaning that drops of water are expected to be in the exhaust pipe 24, then the routine terminates. Alternatively, if a YES answer is obtained, then the routine proceeds to step 26 wherein the heater 34 is energized to heat the air-fuel ratio sensor 32.

The temperature of the exhaust pipe 24 sometimes does not exceeds the threshold α in cold conditions such as winter conditions, so that the air-fuel ratio sensor 32 is not heated by the heater 34. In the absence of heating the air-fuel ratio sensor 32, the temperature of the air-fuel ratio sensor 32 is usually lower than that of the exhaust gas. When such a condition continues for long periods, it may result in deterioration in performance of the air-fuel ratio sensor 32 due to adhesion of foreign objects or impurities contained in the exhaust gas to the above described porous filter of the air-fuel ratio sensor 32 when the exhaust gas passes through the filter. Specifically, when the temperature of the air-fuel ratio sensor 32 is higher than that of the exhaust gas, it will cause the impurities to be burned out, but when not, it will cause the impurities to remain adhered to the filter without being burned out, which results in clogging of the filter and the deterioration of the air-fuel ratio sensor 32.

In order to alleviate such a problem, the ECU 40 works to ease a requirement for the execution of the post injection of fuel into the engine 10 to elevate the temperature of the exhaust gas to promote the control of heating of the air-fuel ratio sensor 32 when the temperature of the air-fuel ratio senor 32 is expected to continue to be lower than that of the exhaust gas. The ECU 40 analyzes whether such a condition is met or not using the history of the temperature of the exhaust gas.

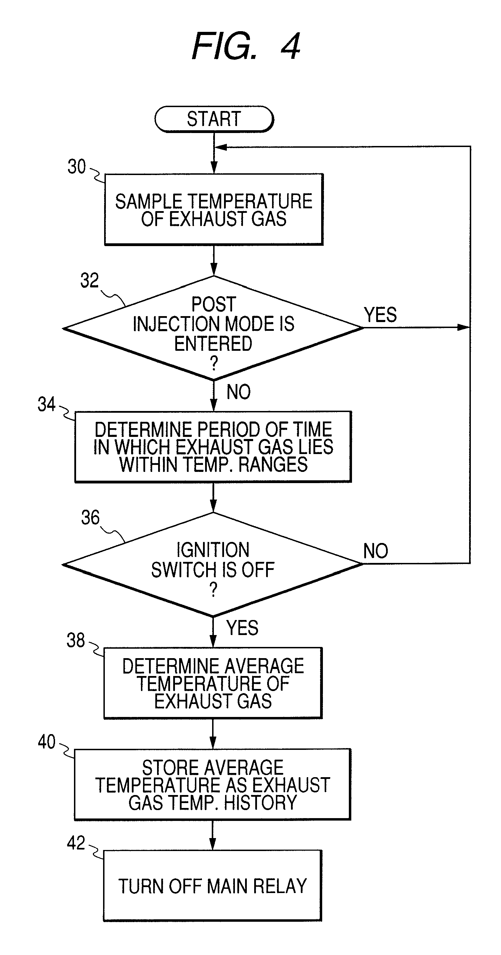

Fig. 4 illustrates a program to be executed by the ECU 40 upon turning on of the ignition switch 44 to collect data on the history of the temperature of the exhaust gas.

First, in step 30, an output of the exhaust gas temperature sensor 30 is sampled to determine the temperature of the exhaust gas in the exhaust pipe 24.

The routine proceeds to step 32 wherein it is determined whether the post injection of fuel into the engine 10 is being carried out or not. This determination is made to prohibit collection of data on the history of the temperature of the exhaust gas while the ECU 40 is in the post injection mode. This is because the temperature of the exhaust gas during the post injection mode is usually much higher than that during a normal running mode of the engine 10.

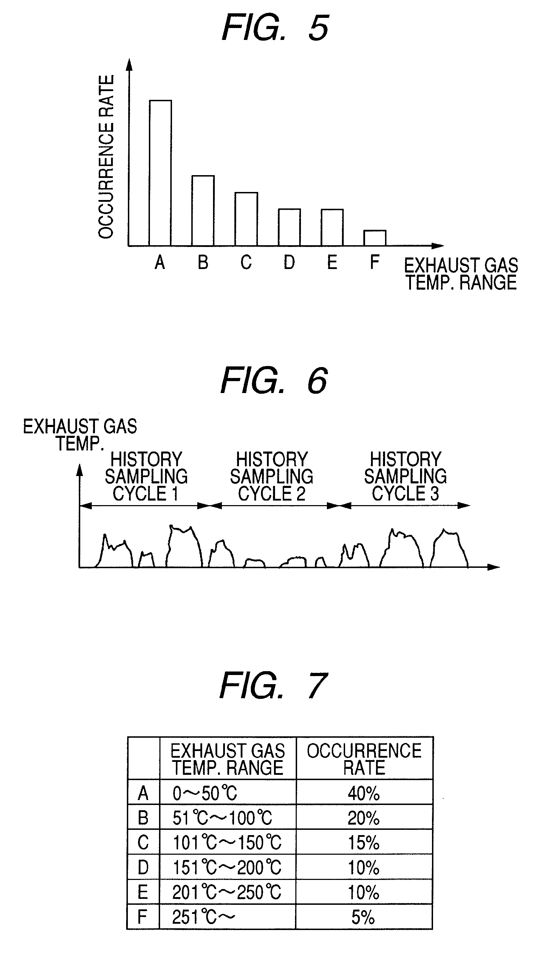

If a NO answer is obtained in step 32 meaning that the engine 10 is not undergoing the post injection, then the routine proceeds to step 34 wherein the length of time the temperature of the exhaust gas lies within one of ranges *A* to *F,* as illustrated in Fig. 5, is determined. Fig. 5 shows an example of the occurrence rate or the number of times the temperature of the exhaust gas has fallen in each of the ranges *A* to *F* as the length of time the temperature of the exhaust gas lies within the each of the ranges *A* to *F*. After step 34, the routine proceeds to step 36 wherein it is determined whether the ignition switch 44 has been turned off or not. This determination is made to acquire the history of a change in temperature of the exhaust gas during each trip of the vehicle between turning on and off of the ignition switch 44. Specifically, the ECU 40 repeats the sequence of operations in steps 30 to 34 during a time interval between turning on and off of the ignition switch 44 to count the number of times the temperature of the exhaust gas has fallen each of the ranges *A* to *F* as representing the length of time the temperature of the exhaust gas lies within the each of the ranges *A* to *F*. Fig. 6 demonstrates an example of histories of changes in the temperature of the exhaust gas over three sampling cycles each of which is defined between the turning on and off of the ignition switch 44.

If a YES answer is obtained in step 36 meaning that the ignitions switch 44 has been turned off, then the routine proceeds to step 38 wherein an average temperature of the exhaust gas is determined. For instance, this may be achieved by expressing the value counted in each of the ranges *A* to *F*, as indicated in Fig. 5, in terms of time percentage, as listed in a table of Fig. 7, multiplying a central temperature of each of the ranges *A* to *F* by a corresponding one of the percentages, and adding them over all the ranges *A* to *F* to derive a weighted average as the average temperature of the exhaust gas.

The routine proceeds to step 40 wherein the average temperature of the exhaust gas, as derived in step 38, is retained as an exhaust gas temperature history in the memory 48 of the ECU 40. The routine proceeds to step 42 wherein after completion of all tasks, the ECU 40 turns off the main relay 46.

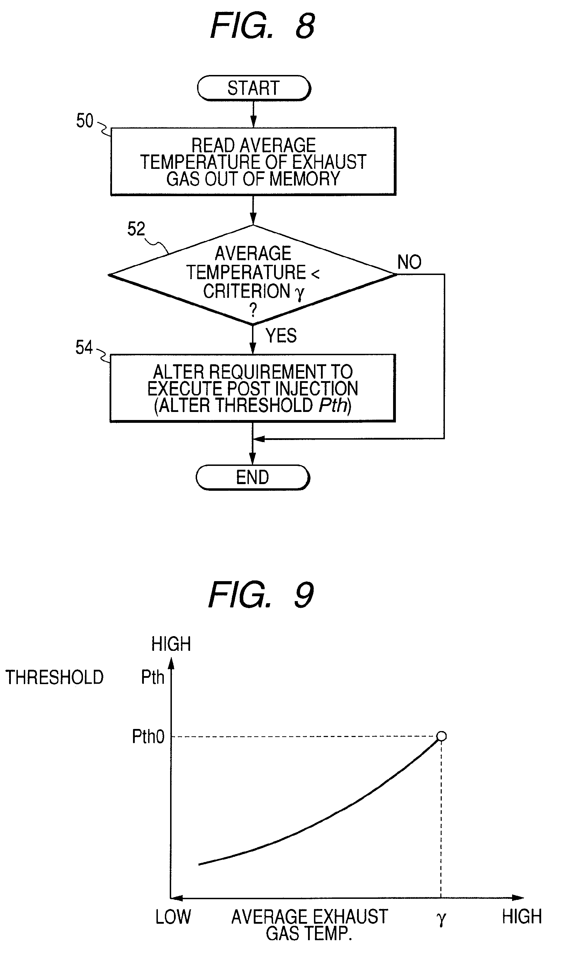

After the average temperature of the exhaust gas is derived in the above manner, the ECU 40 works to increase the temperature of the exhaust gas during a subsequent trip of the vehicle. Specifically, the ECU 40 executes an exhaust gas temperature control program, as shown in Fig. 8, upon turning on of the ignition switch 44.

After entering the program, the routine proceeds to step 50 wherein the average temperature of the exhaust gas is read out of the memory 48. The routine proceeds to step 52 wherein it is determined whether the average temperature, as derived in step 50, is lower than a preselected value *γ* or not. The value γ is a criterion for determining whether the air-fuel ratio sensor 32 is expected to deteriorate or not due to the fact that the temperature of the air-fuel ratio sensor 32 continues to be lower than that of the exhaust gas.

If a YES answer is obtained meaning that the average temperature of the exhaust gas is lower than the value γ, then the routine proceeds to step 54 wherein the threshold *Pth,* as used in step 12 of Fig. 2, is altered. Specifically, as the average temperature of the exhaust gas is lowered, the threshold *Pth,* as demonstrated in Fig. 9, is decreased, thereby easing the requirement for the execution of the post injection of fuel into the engine 10 to elevate the temperature of the exhaust gas to encourage the heating of the air-fuel ratio sensor 32 through the heater 34. Note that a value *Pth0* in Fig. 9 is a critical limit which requires the DPF 26 to be purged of the particulate matter. Specifically, when the average temperature of the exhaust gas is low, so that the temperature of the air-fuel ratio sensor 32 is expected to be lower than that of the exhaust gas, the ECU 40 decreases the threshold *Pth* below the value *Pth0* in step 54 of Fig. 8, thereby promoting the post injection of fuel into the engine 10, that is, easing the requirement for permitting the post injection to be executed.

If a NO answer is obtained in step 52 or after step 54, the routine terminates.

As apparent from the above discussion, when the temperature of the air-fuel ratio sensor 32 was expected to be kept lower than that of the exhaust gas during a previous trip of the vehicle, the ECU 40 works to alter the threshold *Pth,* as used in the current tip of the vehicle, based on the degree to which the temperature of the air-fuel ratio sensor 32 was lower than that of the exhaust gas. This enables the ECU 40 to make a determination of whether the temperature of the air-fuel ratio sensor 32 is kept lower than that of the exhaust gas or not due to the fact that the temperature of the exhaust pipe 24 hardly increases in cold conditions such as winter conditions, and the air-fuel ratio sensor 32 is not warmed by the heater 34. In the presence of such an event, the ECU 40 executes the post injection of fuel into the engine 10 to elevate the temperature of the air-fuel ratio sensor 32.

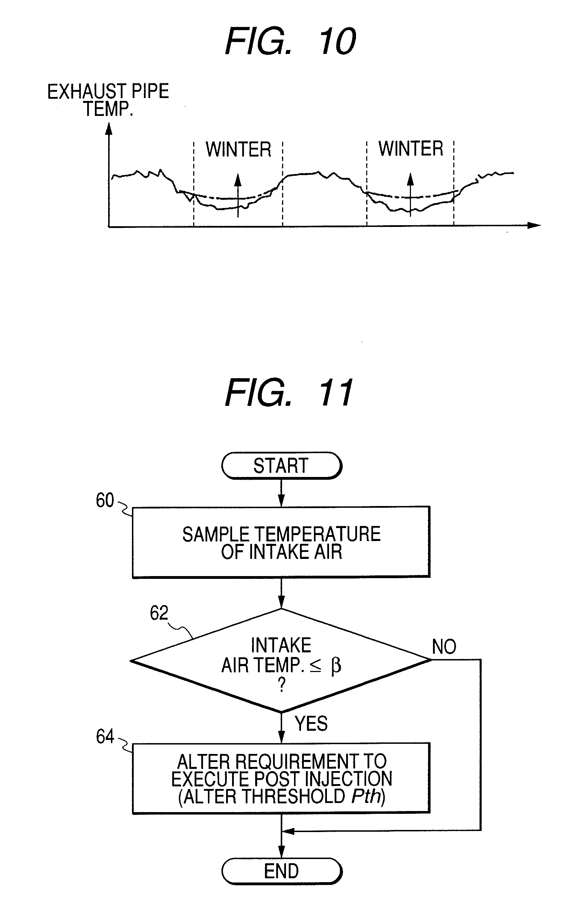

Fig. 10 demonstrates a change in temperature of the exhaust pipe 24, as controlled by the operations in the program of Fig. 8.

Usually, the temperature of the exhaust pipe 24 is, as indicated by a solid line, lower in winter. The alternation of the threshold *Pth* in step 54 of Fig. 8 to promote the post injection of fuel into the engine 10 results in, as indicated by a broken line, an increase in the temperature of the exhaust pipe 24, thereby promoting the control of heating the air-fuel ratio sensor 32 above the temperature of the exhaust gas through the heater 34 in the program of Fig. 3. This minimizes the deterioration of the air-fuel ratio sensor 32.

Fig. 11 shows the exhaust gas temperature control program according to the second embodiment of the invention which is a modification of the one in Fig. 8. This program is initiated upon turning on of the ignition switch 44.

After entering the program, the routine proceeds to step 60 wherein an output of the intake air temperature sensor 14 is sampled to determine the temperature of air changed into the engine 10. The routine proceeds to step 62 wherein it is determined whether the temperature of the intake air, as derived in step 60, is lower than or equal to a preselected value *β* or not. This determination is made for determining whether the temperature of the air-fuel ratio sensor 32 is lower than that of the exhaust gas or not. Usually, immediately after start-up of the engine 10, the temperature of the intake air is substantially identical with that of the outside air. Therefore, the lower the temperature of the intake air, the longer a period of time for which the temperature of the air-fuel ratio sensor 32 is lower than that of the exhaust gas. The ECU 40 uses the temperature of the intake air sampled immediately after start-up of the engine 10 as a function of the temperature of the air-fuel ratio sensor 32 to determine whether the temperature of the air-fuel ratio sensor 32 is lower than that of the exhaust gas or not. If a NO answer is obtained meaning that the temperature of the intake air is higher than the preselected value *β*, then the routine terminates. Alternatively, if a YES answer is obtained, then the routine proceeds to step 64 wherein the threshold *Pth,* as used in step 12 of Fig. 2, is decreased as the temperature of the intake air is lower. The routine then terminates.

The engine control system according to the third embodiment of the invention will be described below which is designed to monitor whether the temperature of the exhaust gas has exceeded a predetermined level or not during each trip between turning on and off of the ignition switch 44 and, when the number of the consecutive trips each for which the temperature of the exhaust gas was kept below the predetermined level exceeds a given value, executes the post injection during a subsequent trip of the vehicle.

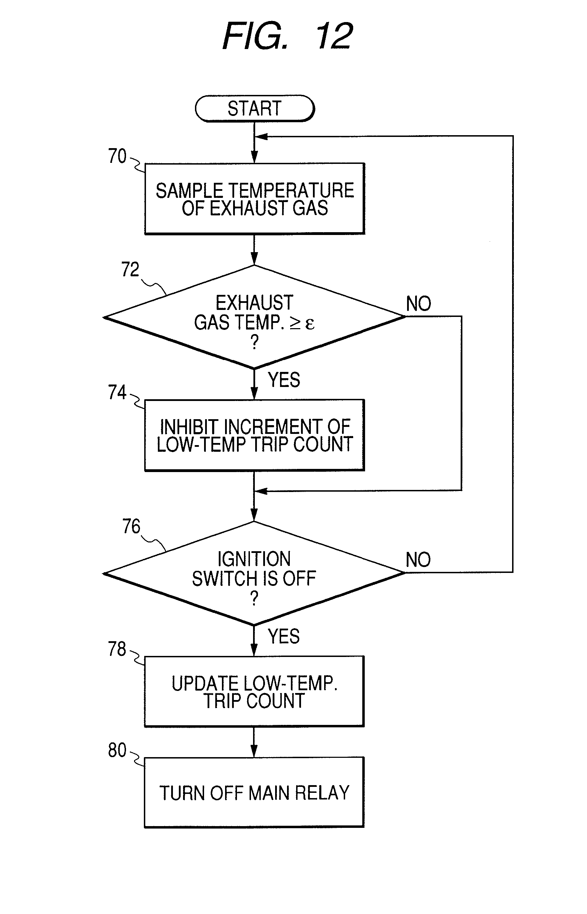

Fig. 12 illustrates a counting program to be performed by the ECU 40 upon turning on of the ignition switch 44 to count the number of the consecutive trips each for which the temperature of the exhaust gas is kept below a given value.

After entering the program, the routine proceeds to step 70 wherein an output of the exhaust gas temperature sensor 30 is sampled to determine the temperature of the exhaust gas flowing in the exhaust pipe 24.

The routine proceeds to step 72 wherein it is determined whether the temperature of the exhaust gas is higher than a given value ε or not. If a NO answer is obtained, then the routine proceeds directly to step 76. Alternatively, if a YES answer is obtained, then the routine proceeds to step 74 wherein a low-temp. trip count that indicates the number of trips each for which the temperature of the exhaust gas is lower than the given value ε is inhibited from being incremented. The routine proceeds to step 76 wherein it is determined whether the ignition switch 44 has been turned off or not. If a NO answer is obtained meaning that the ignitions switch 44 is still kept in the on-state, then the routine returns back to step 70. Specifically, a sequence of steps 70 to 74 is repeated as long as the ignition switch 44 is in the on-state.

If a YES answer is obtained in step 76 meaning that the ignition switch 44 has been turned off, then the routine proceeds to step 78 wherein the low-temp. trip count is updated. Specifically, when the routine has proceeded from step 74 to step 76, the low-temp. trip count is kept as it is without being incremented. Alternatively, when the routine has proceeded directly from step 72 to step 76 without inhibiting the increment of the low-temp. trip count until the ignition switch 44 is turned off, the low-temp. trip count is incremented by one (1).

The routine proceeds to step 80 wherein after completion of all tasks, the ECU 40 turns off the main relay 46.

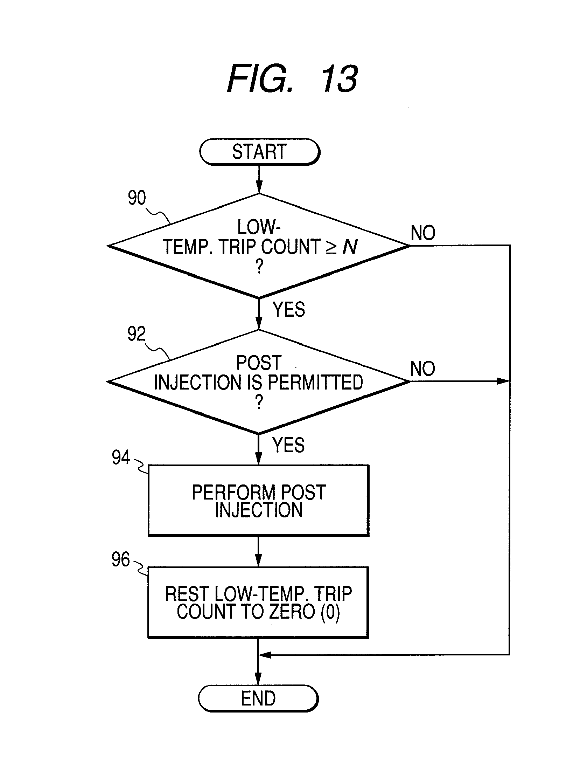

Fig. 13 is a flowchart of a program to be executed by the ECU 40 in a cycle to control the post injection of fuel into the engine 10 in connection with the program of Fig. 12.

After entering the program, the routine proceeds to step 90 wherein it is determined whether the low-temp. trip count, as derived in step 78 of Fig. 12, is greater than or equal to a preselected value N or not. If a YES answer is obtained, then the routine proceeds to step 92 wherein it is determined whether the post injection is permitted to be performed or not. If a YES answer is obtained, then the routine proceeds to step 94 wherein the post injection is performed to spray the fuel into the engine 10 regardless of whether the output from the pressure difference sensor 28 is greater than the threshold *Pth* or not. The routine proceeds to step 96 wherein the low-temp. trip count is initialized to zero (0).

If a NO answer is obtained in step 90 or 92, then the routine terminates.

As apparent from the above discussion, the ECU 40 works to monitor the number of consecutive trips each for which the temperature of the exhaust gas is kept low to analyze the degree to which the air-fuel ratio sensor 32 is warmed by the heater 34, thereby determining whether the temperature of the air-fuel ratio sensor 32 is lower than that of the exhaust gas or not.

The engine control system according to the fourth embodiment of the invention will be described below which is designed to monitor the fact that the temperature of the air-fuel ratio sensor 32 continues to be lower than that of the exhaust gas by using a ratio of a heater on-time for which the heater 34 is activated to heat the air-fuel ratio sensor 32 to a total time that is the sum of the heater on-time and a heater off-time for which the heater 34 is not activated (i.e., a time interval between turning on and off of the ignition switch 44).

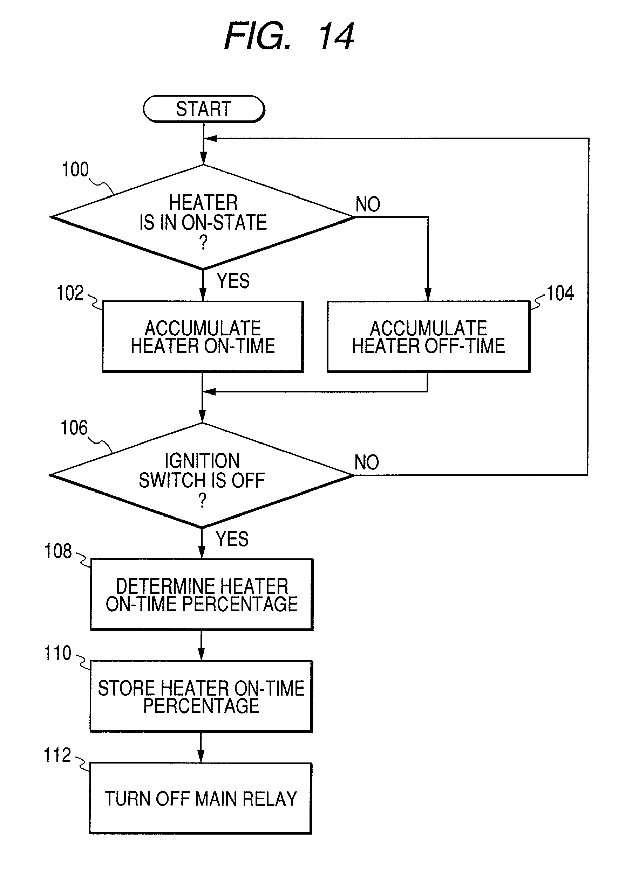

Fig. 14 is a flowchart of a program to be executed by the ECU 40 of the fourth embodiment upon turning on of the ignition switch 44.

After entering the program, the routine proceeds to step 100 wherein it is determined whether the heater 34 is being energized or not. If a YES answer is obtained meaning that the heater 34 is turned on to warm the air-fuel ratio sensor 32, then the routine proceeds to step 102. If the flow from step 100 to step 102 is for the first time after the ignition switch 44 is turned on, the length of the heater on-time starts to be counted. If such a flow is a second or subsequent one, the heater on-time continues to be counted or starts to be accumulated to derive a total of the heater on-time after the ignition switch 44 is turned on.

Alternatively, if a NO answer is obtained in step 100, then the routine proceeds to step 104. If the flow from step 100 to step 104 is for the first time after the ignition switch 44 is turned on, the length of the heater off-time starts to be counted. If such a flow is a second or subsequent one, the heater off-time continues to be counted or starts to be accumulated to derive a total of the heater off-time after the ignition switch 44 is turned on.

After step 102 or step 104, the routine proceeds to step 106 wherein it is determine whether the ignition switch 44 has been turned off or not. If a NO answer is obtained meaning that the ignitions switch 44 is still in the on-state, then the routine returns back to step 100. Alternatively, if a YES answer is obtained, then the routine proceeds to step 108 wherein a ratio of the heater on-time to the total time that is the sum of the heater on-time and the heater off-time is determined in terms of percentage (%), which will be referred to as a heater on-time percentage below.

The routine proceeds to step 110 wherein the heater on-time percentage, as derived in step 108, is retained in the memory 48. The routine proceeds to step 112 wherein after completion of all tasks, the ECU 40 turns off the main relay 46.

When, after the heater on-time percentage is found, the ignition switch 44 has been turned on again to start a subsequent trip of the vehicle, the ECU 40 works to determine whether the heater on-time percentage is smaller than a given value or not. If so, the ECU 40 decides that the temperature of the air-fuel ratio sensor 32 is kept lower than that of the exhaust gas and alters the threshold *Pth,* as used in step 12 of Fig. 2, to ease the requirement for the execution of the post injection of fuel into the engine 10, thereby elevating the temperature of the exhaust gas to encourage the heating of the air-fuel ratio sensor 32 through the heater 34.

The engine control system of each of the above embodiments may be modified in the following manner.

The condition in which the temperature of the air-fuel ratio sensor 32 is lower than that of the exhaust gas may alternatively be found based on a ratio of time for which the temperature of the exhaust pipe 24 is lower than the threshold temperature α, as used in step 24 of Fig. 3, to total time for which the diesel engine 10 is running. For instance, the ECU 40 determines and monitors the temperature of the exhaust pipe 24 all times during running of the engine 10 and, when the ignition switch 44 is turned off, calculates the time for which the temperature of the exhaust pipe 24 was lower than the threshold temperature α and the time for which the temperature of the exhaust pipe 24 was higher than the threshold temperature α and determines the above ratio. If such the ratio is greater than a given value, it may be determined that the temperature of the air-fuel ratio sensor 32 is lower than that of the exhaust gas.

The post injection is permitted to be performed when the output of the pressure difference sensor 28 is greater than or equal to the threshold *Pth,* but however, it may be performed when an estimate of the amount of particulate matter trapped in the DPF 26 exceeds a given threshold. The estimate of the amount of particulate matter may be calculated by time-integrating the amount of particulate matter trapped per unit time, as derived by look-up using a map table based on the speed of the engine 10 and the load on the engine 10 (i.e., the quantity of fuel injected into the engine 10). The post injection may also be performed when the running time of the engine 10 or the travel distance of the vehicle is greater than a given threshold.

The purging of the DPF 26 may be achieved by heating the DPF 26 using a built-in heater. This also results in an increase in temperature of exhaust gas flowing upstream of the air-fuel ratio sensor 32.

The promotion of control of heating the air-fuel ratio sensor 32 to elevate the temperature of the exhaust gas by means of the heater 34 is achieved by purging the DPF 26, but however it may alternatively be established by retarding the timing at which the main injection is performed to contribute to output of torque of the engine 10. In a case where the engine control system is equipped with an exhaust gas recirculation (EGR) device working to recirculate part of the exhaust gas from the exhaust pipe 24 to the intake pipe 12, the elevation in temperature of the exhaust gas may be accomplished by decreasing the amount of the exhaust gas to be fed back to the intake pipe 12. In a case where the engine control system has an intake throttle valve installed in the intake pipe 12, the elevation in temperature of the exhaust gas may be accomplished by moving the valve position of the intake throttle valve to a closed position to decrease the amount of air to be charged into the engine 10.

In place of the air-fuel ratio sensor 32, a NOx sensor working to measure the concentration of nitrogen oxides, a HC sensor working to measure the concentration of hydrocarbon may alternatively be used. Such type of gas sensors designed to be sensitive to components contained in exhaust emissions from automotive engines are typically equipped with a porous filter covering a sensing portion, therefore, they tend to deteriorate in sensing characteristics due to the continued condition in which the temperature of the gas sensor is lower than that of the exhaust gas. The engine control system of this invention is, thus, useful for such gas sensors.

The engine control system may also be equipped with a temperature sensor to measure the temperature of the exhaust pipe 24 or designed to determine an estimate of the temperature of the exhaust gas instead of use of the exhaust temperature sensor 30.

While the present invention has been disclosed in terms of the preferred embodiments in order to facilitate better understanding thereof, it should be appreciated that the invention can be embodied in various ways without departing from the principle of the invention. Therefore, the invention should be understood to include all possible embodiments and modifications to the shown embodiments witch can be embodied without departing from the principle of the invention as set forth in the appended claims.

A gas sensor control apparatus for an exhaust gas sensor working to measure a selected component of exhaust gas from a diesel engine. The apparatus consists of a heater to heat the exhaust gas sensor to activate it and a controller working to restrict an operation of the heater in the condition that drops of water are expected to exist in an exhaust system of the engine. The controller determines whether the condition in which the temperature of the exhaust gas sensor is expected to be lower than that of the exhaust gas is met or not based on an operating condition of the diesel engine. When the temperature condition is met, the controller elevates the temperature of the exhaust gas to promote heating of the exhaust gas sensor through the heater, thereby minimizing the deterioration in characteristics or performance of the exhaust gas sensor.

## Claims

1. A gas sensor control apparatus for use in controlling an operation of an exhaust gas sensor working to measure a given component of exhaust gas from a diesel engine comprising:
a heater working to heat the exhaust gas sensor to activate the exhaust gas sensor; and
a controller working to restrict an operation of said heater in a condition that a drop of water is expected to exist in an exhaust system of the engine, said controller determining whether a given temperature condition in which a temperature of the exhaust gas sensor is expected to be lower than that of the exhaust gas is met or not based on a given parameter that is a function of an operating condition of the diesel engine, when the temperature condition is determined to be met, said controller working to elevate the temperature of the exhaust gas to promote heating of the exhaust gas sensor by means of said heater.

2. A gas sensor control apparatus as set forth in claim 1, wherein when the temperature condition is determined to be met, said controller works to permit post injection of fuel injected to the diesel engine to be performed to purge an exhaust aftertreatment mechanism installed upstream of the exhaust gas sensor in the exhaust system to elevate the temperature of the exhaust gas to promote the heating of the exhaust gas sensor by means of said heater.

3. A gas sensor control apparatus as set forth in claim 1, wherein said controller monitors a temperature of the exhaust gas as the given parameter, and wherein said controller determines whether the temperature condition is met or not based on a history of a change in the temperature of the exhaust gas.

4. A gas sensor control apparatus as set forth in claim 3, wherein said controller averages the temperature of the exhaust gas to quantify the change in the temperature of the exhaust gas as the history thereof.

5. A gas sensor control apparatus as set forth in claim 3, wherein when the number of consecutive conditions each in which the temperature of the exhaust gas is kept lower than a given value during a run of the diesel engine reaches a given value, said controller determines that the temperature condition is met.

6. A gas sensor control apparatus as set forth in claim 1, wherein the given parameter is a function of a temperature of outside air, and wherein said controller determines whether the temperature condition is met or not based on the function of the temperature of the outside air.
